# EUROPEAN PATENT APPLICATION

(11) **EP 4 523 900 A1**
(43) Date of publication of application: **19.03.2025**
(21) Application number: 23803495.3
(22) Date of filing: 28.04.2023
(51) Int. Cl.: B32B 7/023, B05D 1/36, B05D 5/06, B05D 7/24, B32B 27/20, B62D 25/00, B62D 29/04

(54) **AUTOMOBILE BODY AND METHOD FOR FABRICATING SAME**

(30) Priority: 13.05.2022 JP 2022079560
(71) Applicant: MAZDA MOTOR CORPORATION, Hiroshima 730-8670 (JP); Nippon Paint Automotive Coatings Co., Ltd., Hirakata-shi, Osaka 573-1153 (JP)
(72) Inventor: YAMANE, Takakazu, Aki-gun, Hiroshima 730-8670 (JP); OKAMOTO, Keiichi, Aki-gun, Hiroshima 730-8670 (JP); TERAMOTO, Kouji, Aki-gun, Hiroshima 730-8670 (JP); NONAKA, Ryuji, Aki-gun, Hiroshima 730-8670 (JP); MARUO, Kenji, Hirakata-shi, Osaka 573-1153 (JP); KIYONAGA, Hiroshi, Hirakata-shi, Osaka 573-1153 (JP)
(74) Representative: Mewburn Ellis LLP
(86) International application number: PCT/JP2023/016906
(87) International publication number: WO 2023/219017

(57) **Abstract**

Provided are an automobile body having both whiteness and a metallic texture, and a method for manufacturing the automobile body. An automobile body including an article to be coated and a multilayer coating film, wherein the multilayer coating film includes: a colored coating film formed on the article to be coated and containing a white pigment; a glitter coating film formed on the colored coating film and containing a glitter pigment; and a clear coating film formed on the glitter coating film, a lightness L*45 based on a spectral reflectance attained when light I₄₅ applied at an angle of 45 degrees with respect to a surface of the multilayer coating film is received at an angle of 45 degrees with respect to regularly-reflected light is 70 or more and 90 or less, a ratio of a lightness L*5 based on a spectral reflectance attained when the light I₄₅ is received at an angle of 5 degrees with respect to regularly-reflected light to a lightness L*15 based on a spectral reflectance attained when the light I₄₅ is received at an angle of 15 degrees with respect to regularly-reflected light, L*5/L*15, is 1.2 or more and 2.5 or less, an occupancy of the glitter pigment as viewed from the surface of the multilayer coating film is 10% or more and 30% or less, and a graininess on the surface of the multilayer coating film is 1.0 or more and 3.0 or less.

## Description

### TECHNICAL FIELD

The present invention relates to an automobile body and a method for manufacturing the same.

### BACKGROUND ART

In recent years, with the progress of technology, coating films having various colors and textures have been proposed for automobile bodies. Among them, a white coating film having metallic luster has attracted attention. Patent Documents 1 and 2 each disclose a method for forming a coating film having a brightness and clear whiteness.

### PRIOR ART DOCUMENTS

### PATENT DOCUMENTS

Patent Document 1: JP-A-2003-245603
Patent Document 2: JP-A-2011-45805

### SUMMARY OF THE INVENTION

### PROBLEMS TO BE SOLVED BY THE INVENTION

However, even when the methods of Patent Documents 1 and 2 are used, it is difficult to achieve both whiteness and a metallic texture (for example, a brightness). When the whiteness is emphasized, the brightness is prone to be lost. When the brightness is emphasized, whiteness is prone to be lost, and a silver color appears. A challenge of the present invention is to provide an automobile body having both whiteness and a metallic texture and a method for manufacturing the automobile body.

### SOLUTIONS TO THE PROBLEMS

In order to solve the above-described problems, the present invention provides the following embodiments.
[1] An automobile body comprising an article to be coated and a multilayer coating film, wherein
   the multilayer coating film includes:
   a colored coating film formed on the article to be coated and containing a white pigment;
   a glitter coating film formed on the colored coating film and containing a glitter pigment; and
   a clear coating film formed on the glitter coating film,
   a lightness L*45 based on a spectral reflectance attained when light I₄₅ applied at an angle of 45 degrees with respect to a surface of the multilayer coating film is received at an angle of 45 degrees with respect to regularly-reflected light is 70 or more and 90 or less,
   a ratio of a lightness L*5 based on a spectral reflectance attained when the light I₄₅ is received at an angle of 5 degrees with respect to regularly-reflected light to a lightness L*15 based on a spectral reflectance attained when the light I₄₅ is received at an angle of 15 degrees with respect to regularly-reflected light, L*5/L*15, is 1.2 or more and 2.5 or less,
   an occupancy of the glitter pigment as viewed from the surface of the multilayer coating film is 10% or more and 30% or less, and
   a graininess on the surface of the multilayer coating film is 1.0 or more and 3.0 or less.
[2] The automobile body according to [1], wherein the lightness CL*45 based on a spectral reflectance attained when light IC₄₅ applied at an angle of 45 degrees with respect to a surface of the colored coating film is received at an angle of 45 degrees with respect to regularly-reflected light is 70 or more and 95 or less.
[3] The automobile body according to [1] or [2], wherein the glitter coating film has a thickness of 0.05 µm or more and 1.0 µm or less.
[4] The automobile body according to any one of [1] to [3], wherein the glitter pigment contains a scaly glitter pigment having a thickness of 0.05 µm or more and 0.3 µm or less.
[5] The automobile body according to any one of [1] to [4], wherein the glitter pigment includes aluminum particles.
[6] The automobile body according to any one of [1] to [5], wherein the glitter coating film further includes titanium dioxide.
[7] A method for manufacturing an automobile body, the method comprising:
   applying a colored coating material containing a white pigment onto an article to be coated to form an uncured colored coating film;
   applying a glitter pigment dispersion containing a glitter pigment onto the uncured colored coating film to form an uncured glitter coating film;
   applying a clear coating material onto the uncured glitter coating film to form an uncured clear coating film; and
   curing the uncured colored coating film, the uncured glitter coating film, and the uncured clear coating film to obtain a multilayer coating film,
   wherein a lightness L*45 based on a spectral reflectance attained when light I₄₅ applied at an angle of 45 degrees with respect to a surface of the multilayer coating film is received at an angle of 45 degrees with respect to regularly-reflected light is 70 or more and 90 or less,
   a ratio of a lightness L*5 based on a spectral reflectance attained when the light I₄₅ is received at an angle of 15 degrees with respect to regularly-reflected light to a lightness L*15 based on a spectral reflectance attained when the light I₄₅ is received at an angle of 15 degrees with respect to regularly-reflected light, L*5/L*15, is 1.2 or more and 2.5 or less, and
   an occupancy of the glitter pigment as viewed from the surface of the multilayer coating film is 10% or more and 30% or less, and
   a graininess on the surface of the multilayer coating film is 1.0 or more and 3.0 or less.
[8] The method for manufacturing an automobile body according to [7], wherein the clear coating material is a two-pack coating material including a hydroxy group-containing resin and a polyisocyanate compound.
[9] The method for manufacturing an automobile body according to [7] or [8], wherein the glitter pigment dispersion has a solid content of 0.1% by mass or more and 10.0% by mass or less.

### EFFECTS OF THE INVENTION

According to the present invention, it is possible to provide an automobile body having both whiteness and a metallic texture are achieved, and a method for manufacturing the automobile body.

### BRIEF DESCRIPTION OF THE DRAWINGS

Fig. 1 is a diagram for explaining a light-receiving angle for spectral reflectance.
Fig. 2 is a sectional view schematically illustrating an automobile body according to one embodiment of the present invention.
Fig. 3 is a sectional view schematically illustrating a glitter coating film according to one embodiment of the present invention.
Fig. 4 is a flowchart showing a method for manufacturing an automobile body according to one embodiment of the present invention.

### DESCRIPTION of EMBODIMENTS

### A. Automobile body

An automobile body according to the present embodiment constitutes at least a part of an automobile. The automobile body includes an article to be coated and a multilayer coating film. The multilayer coating film includes a colored coating film formed on the article to be coated and containing a white pigment, a glitter coating film formed on the colored coating film and containing a glitter pigment, and a clear coating film formed on the glitter coating film.

In order to achieve both whiteness and a metallic texture, a brightness in a narrow region in a highlight (hereinafter referred to as super highlight) is enhanced and lightness in a shade is enhanced in a multilayer coating film. By limiting the region where the metallic texture is expressed to super highlight, the automobile body can be made to look still whiter in a region on the further shade side.

That is, the flip-flop value (FF value) in the vicinity of the regularly-reflected light is increased. The FF value is an index indicating a change in lightness when the multilayer coating film is viewed from a plurality of directions. The larger the FF value, the larger the lightness difference. As in the present embodiment, by increasing the FF value in the vicinity of regularly-reflected light, the metallic texture in the super highlight is enhanced.

In the present embodiment, as the FF value in the vicinity of regularly-reflected light, a ratio of a lightness L*5 based on a spectral reflectance attained when light I₄₅ applied at an angle of 45 degrees (°) with respect to a surface of a multilayer coating film is received at an angle of 5 degrees with respect to regularly-reflected light to a lightness L*15 based on a spectral reflectance attained when the light I₄₅ is received at an angle of 15 degrees with respect to regularly-reflected light, L*5/L*15, is determined. L*5/L*15 is 1.2 or more and 2.5 or less. When L*5/L*15 is within this range, the lightness change in highlight increases. That is, while a high metallic texture is obtained in super highlight, the color tone of white is intensified in the region on the further shade side. L*5/L*15 is preferably 1.30 or more, and more preferably 1.35 or more. L*5/L*15 is preferably 2.40 or less, and more preferably 2.20 or less. The super highlight is a region from -10 degrees to 10 degrees with respect to regularly-reflected light (angle: 0 degrees).

The lightness L*5 is a lightness L* in the L*a*b* color system (CIE1976 L*a*b* color space) calculated from the spectral reflectance attained when the light I₄₅ is received at an angle of 5 degrees with respect to regularly-reflected light. Similarly, the lightness L*15 is a lightness L* in the L*a*b* color system calculated from the spectral reflectance attained when the light I₄₅ is received at an angle of 15 degrees with respect to regularly-reflected light. Similarly, the lightness L*45 to be described later is a lightness L* in the L*a*b* color system calculated from the spectral reflectance attained when the light I₄₅ is received at an angle of 45 degrees with respect to regularly-reflected light. Each of the lightness L*5, L*15, and L*45 can take a numerical value of 0 or more. The lightness L* can be obtained using a variable angle color difference meter (e.g., Gonio-Spectrophotometer GSP-1, manufactured by MURAKAMI COLOR RESEARCH LABORATORY CO., LTD.). The lightness L* is an average value of the lightness L* of five different samples.

The lightness L*5 is not limited. The lightness L*5 is preferably 120 or more in that the brightness is further enhanced, and more preferably 150 or more. The lightness L*15 is also not limited. The lightness L*15 may be 90 or more, and may be 100 or more. The lightness L*15 is preferably 150 or less in that the FF value is likely to be large, and more preferably 130 or less. The value obtained by subtracting the lightness L*15 from the lightness L*5 is, for example, 40 or more, preferably 45 or more, and more preferably 50 or more.

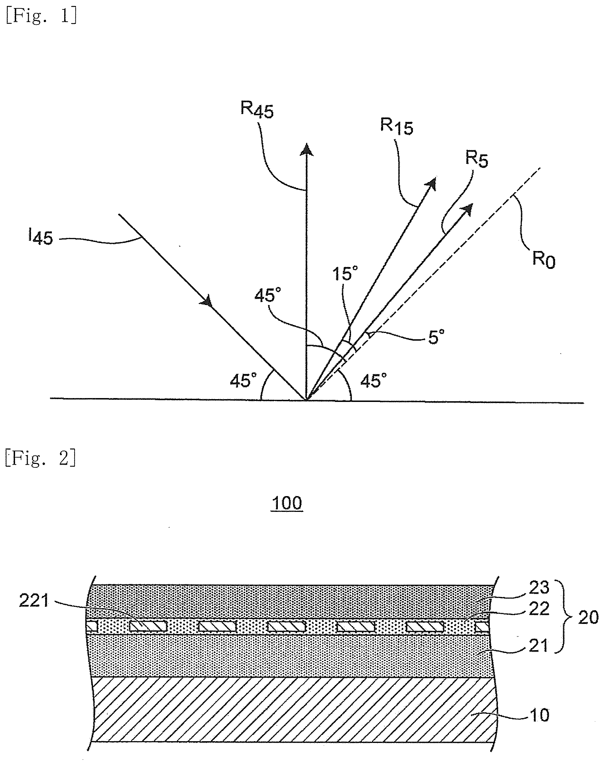

Fig. 1 is a diagram for explaining a light-receiving angle for spectral reflectance. The regularly-reflected light of the light I₄₅ applied at an angle of 45 degrees with respect to a surface of a multilayer coating film is indicated by R₀. The light received at an angle of 5 degrees with respect to the regularly-reflected light of the light I₄₅ is indicated by R₅. The light received at an angle of 15 degrees with respect to the regularly-reflected light of the light I₄₅ is indicated by R₁₅. The light received at an angle of 45 degrees with respect to the regularly-reflected light of the light I₄₅ is indicated by R₄₅.

The Graininess (hereinafter referred to as graininess G) of the multilayer coating film is small. The smaller the graininess G, the stronger the impression that a multilayer coating film is dense, and the further the metallic texture is enhanced. The graininess is 1.0 or more and 3.0 or less. The graininess G is preferably 1.5 or more, and more preferably 1.8 or more. The graininess G is preferably 2.7 or less, and more preferably 2.3 or less.

The graininess G is obtained by imaging a multilayer coating film irradiated with diffused light and analyzing the image with a specific image analysis algorithm. Specifically, the multilayer coating film is irradiated with diffused light from a light source installed in a white-coated hemisphere. The graininess G is obtained by imaging the multilayer coating film from a normal direction thereof with a CCD camera and analyzing the image with a specific image analysis algorithm. The graininess G can be acquired using a multi-angle colorimeter (for example, BYK-mac i, manufactured by BYK-Gardner GmbH). The graininess G* is an average value of the graininess G of five different samples.

The occupancy of the glitter pigment as viewed from the surface of the multilayer coating film is 10% or more and 30% or less. Thus, the white pigment contained in the colored coating film can be visually recognized not through the glitter pigment. Therefore, the lightness in the shade becomes higher. The occupancy of the glitter pigment is preferably 13% or more, and more preferably 16% or more. The occupancy of the glitter pigment is preferably 23% or less, and more preferably 20% or less. In the present embodiment, the graininess G is suppressed low. Therefore, even if the occupancy of the glitter pigment is reduced, the metallic texture can be enhanced.

The occupancy of the glitter pigment is the area ratio of the glitter pigment in the multilayer coating film when viewed from the normal direction. Specifically, the multilayer coating film is observed from the normal direction thereof with an electron microscope. In the observation field, a region corresponding to the glitter pigment and the other region are binarized by image processing software. The area ratio of the glitter pigment is calculated with the area of the observation field as 100%. The magnification of the electron microscope is not limited, and may be, for example, about 100 times or more and about 200 times or less. The size of the observation field is also not limited, and may be, for example, approximately 500 nm or more and 1000 nm or less in length and 1000 nm or more and 1500 nm or less in width. As the electron microscope, an industrial microscope (e.g., ECLIPSE LV150N manufactured by Nikon Instech Co., Ltd.) is used. As the image processing software, for example, NIS-Elements (integrated imaging software produced by Nikon Corporation) and NIS-A AMEAS (software for distance measurement and area calculation, produced by Nikon Corporation) are used. The occupancy is an average value of occupancies in five different observation fields.

In the multilayer coating film of the present embodiment, the lightness L*45 based on the spectral reflectance attained when the light I₄₅ is received at an angle of 45 degrees with respect to regularly-reflected light is 70 or more and 90 or less. As a result, the multilayer coating film looks white from the highlight to the shade. The lightness L*45 is preferably 73 or more, and more preferably 75 or more. The lightness L*45 is preferably 87 or less, and more preferably 85 or less.

The glitter coating film preferably contains a glitter pigment arrayed in parallel with the coating film in that the metallic texture is further improved. In particular, it is preferable that 80% or more in number of the glitter pigment contained in the glitter coating film is arrayed in parallel with the surface of the multilayer coating film. Parallel means that the acute angle θ formed by the surface of the glitter coating film and the glitter pigment is 0 degrees or more and 30 degrees or less in a section of the multilayer coating film.

The array of the glitter pigment is indicated by, for example, the sparkle intensity of the multilayer coating film. It can be said that as the sparkle intensity attained when light applied from a direction inclined by 15 degrees with respect to the normal direction of the coating film is received in the normal direction of the coating film (hereinafter referred to as a Si₁₅ value) is smaller, there are more glitter pigments arrayed in parallel with the glitter coating film. In the present embodiment, the Si₁₅ value of the multilayer coating film can be 3.0 or more and 4.0 or less. When the Si₁₅ value is within this range, it can be said that 80% or more in number of the glitter pigment contained in the glitter coating film is arrayed in parallel with the surface of the glitter coating film. The Si₁₅ value is preferably 3.1 or more, and more preferably 3.2 or more. The Si₁₅ value is preferably 3.8 or less, and more preferably 3.6 or less.

The Si₁₅ value is obtained by imaging light applied from a direction inclined by 15 degrees with respect to the normal direction of the multilayer coating film from the normal direction of the multilayer coating film and analyzing the image with a specific image analysis algorithm. A histogram of lightness levels is used for the image analysis algorithm. The Si₁₅ value can be acquired using a multi-angle colorimeter (for example, BYK-mac i, manufactured by BYK-Gardner GmbH). The Si₁₅ value is an average value of Si₁₅ values of five different samples.

In particular, the arrangement of the scale-like glitter pigment (hereinafter referred to as scaly glitter pigment) can also be confirmed in a section of the multilayer coating film. The acute angle θ is determined from a section of the multilayer coating film as follows. First, the section of the multilayer coating film is imaged with an electron microscope. The obtained section is placed on two-dimensional coordinates (x-y coordinates) to obtain an approximate straight line L₀ of a surface of the glitter coating film. Similarly, the approximate straight line L₁ of a surface of the scaly glitter pigment is obtained. The surface of the scaly glitter pigment is a principal plane closer to the clear coating film. An angle formed by the approximate straight line L₀ and the approximate straight line L₁ is an angle θ. The proportion of the scaly glitter pigment parallel to the glitter coating film is determined by dividing the number of scaly glitter pigments that are arrayed parallel to the glitter coating film and can be wholly observed in the observation field by the number of glitter pigments that can be wholly observed in the observation field.

In the observation with the electron microscope, the magnification is not limited. The magnification of the electron microscope may be, for example, about 100 times or more and 200 times or less. The size of the observation field is also not limited, and may be, for example, approximately 500 nm or more and 1000 nm or less in length and 1000 nm or more and 1500 nm or less in width. In the following observation with an electron microscope, the magnification and the observation field may be similar to those described above.

It is preferable that the scaly glitter pigments do not overlap each other in the glitter coating film. Thus, the scaly glitter pigment is easily arrayed in parallel with the glitter coating film. Furthermore, even when the occupancy of the glitter pigment is low, the impression that the coating film is dense is enhanced, and the metallic texture is improved. The phrase "the scaly glitter pigments do not overlap each other" means that a scaly glitter pigment and another scaly glitter pigment do not overlap each other in part or entirely in the thickness direction in a section of the multilayer coating film. It is not necessary that the scaly glitter pigments are in contact with each other. For example, in viewing the multilayer coating film from the normal direction, when scaly glitter pigments look to overlap in part or entirely each other, the scaly glitter pigments overlap each other in the thickness direction.

In particular, it is preferable that 80% or more in number of the scaly glitter pigments contained in the glitter coating film do not overlap with other scaly glitter pigments. The overlapping ratio of the scaly glitter pigment is determined as follows. First, the section of the multilayer coating film is imaged with an electron microscope. In the obtained section, one or more scaly glitter pigments closest to the clear coating film side of the glitter coating film are defined as reference glitter pigments. Scaly glitter pigments overlapping the reference glitter pigment(s) in the thickness direction are marked. Further, scaly glitter pigment overlapping the marked scaly glitter pigments in the thickness direction are marked. All the scaly glitter pigments that are marked and can be entirely confirmed in the observation field (hereinafter, there may be referred to as overlapping glitter pigment) are counted. At this time, one overlapping glitter pigment is not counted a plurality of times. The proportion of the overlapping glitter pigments is determined by dividing the number of the overlapping glitter pigments by the number of the scaly glitter pigments that can be entirely observed in the observation field (namely, the sum of the reference glitter pigments and the overlapping glitter pigments).

[Article to be coated] The material of the article to be coated is not limited as long as it is suitable for an automobile body. Examples of the article to be coated include a metal material including iron, copper, aluminum, tin, zinc, or an alloy thereof. The shape of the article to be coated is also not limited. The article to be coated may have a plate shape or a three-dimensional shape. The article to be coated constitutes at least a part of the body of a vehicle, such as a passenger car, a truck, or a bus.

The article to be coated may be subjected to degreasing treatment and/or surface treatment. Examples of the surface treatment include phosphate salt treatment, chromate treatment, zirconium chemical conversion treatment, and composite oxide treatment. The metal material preferably has undercoating with an electrodeposition coating material provided after the surface treatment. The electrodeposition coating material may be of a cationic type or of an anionic type.

### [Multilayer coating film]

The multilayer coating film includes a colored coating film, a glitter coating film, and a clear coating film in this order.

The specular glossiness of the multilayer coating film is not limited. The 60 degree specular glossiness of the multilayer coating film may be 100% or more and 180% or less. The 60 degree specular glossiness is measured in accordance with JIS Z 8741 Specular glossiness-Methods of measurement. Specifically, light is applied at an incident angle of 60 degrees with respect to the normal line of the multilayer coating film, and a light flux ϕ_{S} of reflected light at a reflection angle of 60 degrees is measured. Under the same condition, light is applied to a flat surface of glass having a refractive index of 1.567, and a light flux ϕ₀ of reflected light is measured. A value obtained by dividing the light flux ϕ_{S} by the light flux ϕ₀ and then multiplying the resulting quotient by 100 is the 60 degree specular glossiness. The 60 degree specular glossiness is an average value of 60 degree specular glossiness of five different samples.

### <Colored coating film>

The colored coating film hides the texture and color of an article to be coated, and gives a white color tone to an automobile body.

The thickness of the colored coating film is not limited. From the viewpoint of hiding property, the thickness of the colored coating film may be 15 µm or more and 50 µm or less, 18 µm or more and 45 µm or less, or 20 µm or more and 40 µm or less. When the thickness of the colored coating film is within this range, the texture and color of the article to be coated are easily hidden without being seen through the colored coating film. The thickness of the colored coating film is measured with, for example, an electromagnetic film thickness meter. The thickness of the colored coating film is an average value of the thicknesses of the colored coating films in five different samples. The thicknesses of the other layers can be measured and calculated in the same way.

The monochrome hiding film thickness of the colored coating film is preferably 80 µm or less, more preferably 10 µm or more and 70 µm or less, and particularly preferably 15 µm or more and 60 µm or less. The monochrome hiding film thickness is measured using a monochrome checkered hiding power test paper specified in 4.1.2 of JIS K5600-4-1. Specifically, the hiding power test paper is attached to a steel plate, and a coating material is applied in an inclined manner such that the film thickness continuously varies. After the coating material is dried or cured, the coating surface is visually observed under diffused daylight. The minimum film thickness at which the monochrome border of the checker of the hiding power test paper disappears is the monochrome hiding film thickness. This film thickness can be similarly measured with an electromagnetic film thickness meter.

The lightness CL*45 based on the spectral reflectance attained when light IC₄₅ applied at an angle of 45 degrees with respect to the surface of the colored coating film is received at an angle of 45 degrees with respect to regularly-reflected light is preferably 70 or more and 95 or less. Since the colored coating film has high lightness in the shade and the occupancy of the glitter pigment is small, the multilayer coating film looks whiter in the region on the shade side than the super highlight.

### (White pigment)

The colored coating film contains a white pigment. The white pigment is not limited. Examples of the white pigment include titanium dioxide, zinc oxide, and silica. These are used singly or two or more of them are used in combination. Titanium dioxide is preferable in that the refractive index is high. The titanium dioxide may be either a rutile type or an anatase type. Among them, rutile-type titanium dioxide is preferable from the viewpoint of weather resistance. The surface of the titanium dioxide may have been treated with an inorganic compound such as silica, zirconium, or aluminum.

The primary particle size of the white pigment is not limited. From the viewpoint of hiding property, the primary particle size of the white pigment is preferably 100 nm or more and 500 nm or less, and more preferably 200 nm or more and 400 nm or less. The primary particle size can be measured from an electron microscope image of a section of the multilayer coating film using image processing software.

The amount of the white pigment is not limited. The white pigment is added such that the lightness L*45 is 70 or more and 90 or less. The white pigment is preferably added such that the lightness CL*45 of the colored coating film is 70 or more and 95 or less. Specifically, the amount of the white pigment is preferably 5% by mass or more and 40% by mass or less, more preferably 10% by mass or more and 30% by mass or less, and still more preferably 15% by mass or more and 25% by mass or less of the colored coating film. The amount of the white pigment is preferably 50 parts by mass or more and 200 parts by mass or less, and more preferably 80 parts by mass or more and 150 parts by mass or less, based on 100 parts by mass of the first resin described later.

### (First resin)

The colored coating film contains, for example, a first resin as a vehicle in addition to the white pigment. The white pigment is dispersed in the first resin.

The first resin is not limited. The first resin preferably contains a cured product of a first thermosetting resin. The first resin is obtained, for example, by curing a first thermosetting resin formed of a crosslinkable functional group and a base resin. A first curing agent may be used for the curing.

Examples of the crosslinkable functional group include a carboxy group, a hydroxy group, an epoxy group, a silanol group, and a (meth)acryloyl group.

Examples of the base resin include an acrylic resin, a polyester resin, an alkyd resin, a polyurethane resin, an epoxy resin, and a fluororesin. The epoxy resin may be a urethane-modified epoxy resin. The polyester resin may be a urethane-modified polyester resin. The acrylic resin may be a urethane-modified acrylic resin. Each urethane-modified resin has a urethane linkage in the resin skeleton. These are used singly or two or more of them are used in combination. Among them, the acrylic resin and the urethane-modified polyester are preferable in that chipping resistance is improved.

The acrylic resin is obtained by, for example, copolymerizing an α,β-ethylenically unsaturated carboxylic acid, a (meth)acrylic acid ester having a functional group such as a hydroxy group, an amide group, or a methylol group, another (meth)acrylic acid ester, and styrene.

The urethane-modified polyester is obtained via a reaction between a hydroxy group-containing polyester and an aliphatic diisocyanate compound. The hydroxy group-containing polyester is prepared by polycondensation of an acid component such as a polyvalent carboxylic acid and/or an acid anhydride with a polyhydric alcohol. Examples of the aliphatic diisocyanate compound include hexamethylene diisocyanate, trimethylhexamethylene diisocyanate, cyclohexane-1,4-diisocyanate, dicyclohexylmethane-4,4-diisocyanate, and methylcyclohexane diisocyanate.

The amount of the first resin is not limited. The amount of the first resin is preferably 60% by mass or more and 95% by mass or less of the colored coating film in that a uniform coating film is easily formed, more preferably 70% by mass or more and 90% by mass or less, and still more preferably 75% by mass or more and 85% by mass or less.

The glass transition temperature (Tg) of the first resin is not limited. From the viewpoint of the hardness and smoothness of a coating film, the Tg of the first resin is preferably -40°C or more and 20°C or less, and more preferably -30°C or more and 10°C or less. The Tg is measured by a differential scanning calorimeter (DSC) in accordance with JIS K 7121.

### (Others)

The colored coating film may further contain other pigments depending on the hiding property and the like. Examples of such other pigments include metallic pigments, rust preventive pigments, coloring pigments other than white pigments, and extender pigments. Examples of the extender pigment include calcium carbonate, barium sulfate, clay, and talc.

The colored coating film may also contain various additives, as necessary. Examples of the additives include ultraviolet absorbers, antioxidants, antifoaming agents, surface conditioning agents, dispersants, and pinhole inhibitors.

### <Glitter coating film>

The glitter coating film imparts a metallic texture to an automobile body.

The thickness of the glitter coating film is not limited. The thickness of the glitter coating film is preferably 0.05 µm or more and 1.0 µm or less in that the glitter pigment is easily arrayed in parallel with the coating film. The thickness of the glitter coating film may be 0.1 µm or more, and may be 0.3 µm or more. The thickness of the glitter coating film may be 0.8 µm or less, and may be 0.7 µm or less.

### (Glitter pigment)

The glitter coating film contains a glitter pigment. The glitter pigment is not limited as long as it reflects light. Among them, the scaly glitter pigment is preferable in that the glitter coating film can be thinned and the metallic texture is easily improved. The aspect ratio of the scaly glitter pigment may be, for example, 2 or more. The aspect ratio is a ratio of a major axis of one principal plane of the scaly glitter pigment to a distance (thickness) between two principal planes of the scaly glitter pigment: major axis/thickness. The aspect ratio of the scaly glitter pigment may be 10 or more and 1000 or less.

The glitter coating film may contain a glitter pigment (glitter pigment having an aspect ratio of less than 2) other than the scaly glitter pigment, together with the scaly glitter pigment. However, the content of the other glitter pigments is preferably 10% by mass or less, and preferably 5% by mass or less of all glitter pigments. Thus, the scaly glitter pigment is more easily arrayed in parallel with the coating film.

The major axis of the glitter pigment is not limited. The major axis of the glitter pigment is preferably 1 µm or more and 80 µm or less in that the occupancy is easily adjusted, and preferably 3 µm or more and 50 µm or less. The major axis is calculated by observing a multilayer coating film from the normal direction thereof with an electron microscope. In the observation field, a region corresponding to the glitter pigment and the other region are binarized by image processing software. Next, 20 glitter pigments are arbitrarily selected, and their longest diameters are each measured. The average value of these measured values is the major axis of the glitter pigment.

The thickness of the glitter pigment, particularly the scaly glitter pigment is preferably 0.05 µm or more and 0.3 µm or less. Thus, the glitter coating film can be thinned. The thickness of the glitter pigment is preferably 0.25 µm or less, and more preferably 0.2 µm or less. The thickness may be calculated by observing a section of the multilayer coating film with an electron microscope. In the observation field, a region corresponding to the glitter pigment and the other region are binarized by image processing software. Next, 20 glitter pigments are arbitrarily selected, and the lengths of their thickest parts are each measured. The average value of these measured values is the thickness of the glitter pigment.

The average particle size of the glitter pigment is not limited. The average particle size of the glitter pigment is preferably 2 µm or more and 50 µm or less in that the brightness is easily enhanced, and preferably 5 µm or more and 35 µm or less. The average particle size means a volume average particle size D50. The volume average particle size D50 can be measured using a laser Doppler type particle size analyzer (for example, "Microtrac UPA 150" manufactured by Nikkiso Co., Ltd.).

The glitter pigment is not limited. A glitter pigment that does not have multiple-beam interference as a color development function is preferable in that L*5/L*15 is likely to be large. Examples of such a glitter pigment include metal particles. Examples of the metal particles specifically include particles of aluminum, copper, zinc, iron, nickel, tin, aluminum oxide, and alloys containing these. The glitter pigment may be colored. These are used singly or two or more of them are used in combination. Mica is representative as a glitter pigment having multiple-beam interference as a color development function. Even when metal particles having high reflectance are used, high lightness L*45 can be realized by controlling the occupancy thereof to be low.

In particular, scaly metal particles are more preferable. The scaly aluminum particles are more preferable in that a high brightness can be obtained with a small amount.

The amount of all glitter pigments is preferably 3% by mass or more and 30% by mass or less, and more preferably 5% by mass or more and 25% by mass or less of the glitter coating film. Thus, the occupancy of the glitter pigment tends to be 10% or more and 30% or less.

### (Viscosity modifier)

The glitter coating film may contain a viscosity modifier. The viscosity modifier adjusts the viscosity of the glitter pigment dispersion (Y), which is a material of the glitter coating film. In the glitter pigment dispersion (Y) immediately after application, the glitter pigment is arrayed in parallel with the coating film. However, when the liquid component contained in the glitter pigment dispersion (Y) flows, the glitter pigment also flows and the arrangement thereof is disturbed. By appropriately adjusting the viscosity of the glitter pigment dispersion (Y), in the glitter coating film after application and before curing, the flow of the liquid component is inhibited, and disturbance of the arrangement of the glitter pigment is also inhibited. Therefore, the glitter pigment is easily held in a state of being arrayed in parallel with the coating film.

The viscosity modifier is not limited. Examples of the viscosity modifier include a silica-based fine powder, a mineral-based viscosity modifier, a barium sulfate atomized powder, a polyamide-based viscosity modifier, an organic resin fine particle viscosity modifier, a diurea-based viscosity modifier, a urethane associative viscosity modifier, a polyacrylic acid-based viscosity modifier, which is acrylic swelling-type, and a cellulose-based viscosity modifier. These are used singly or two or more of them are used in combination. Among them, the cellulose-based viscosity modifier is preferable in that the glitter pigment is easily dispersed and a superior quick drying property is attained.

Examples of the mineral-based viscosity modifier include swellable laminar silicates whose crystal structure has a 2:1 type structure. Examples of such swellable laminar silicates specifically include smectite group clay minerals, such as natural or synthetic montmorillonite, saponite, hectorite, stevensite, beidellite, nontronite, bentonite, and laponite; swelling mica group clay minerals, such as Na-type tetrasilicic fluorine mica, Li-type tetrasilicic fluorine mica, Na salt-type fluorine taeniolite, and Li-type fluorine taeniolite; vermiculite; and substitution products or derivatives thereof.

Examples of the polyacrylic acid-based viscosity modifier include sodium polyacrylate and a polyacrylic acid-(meth)acrylic acid ester copolymer. Examples of commercially available products of the polyacrylic acid-based viscosity modifier include Primal ASE-60, Primal TT615, and Primal RM5 (all manufactured by The Dow Chemical Company), SN Thickener 613, SN Thickener 618, SN Thickener 630, SN Thickener 634, and SN Thickener 636 (all manufactured by San Nopco Ltd.). The solid acid value of the polyacrylic acid-based viscosity modifier is not limited. The solid acid value may be 30 mg KOH/g or more and 300 mg KOH/g or less, and may be 80 mg KOH/g or more and 280 mg KOH/g or less.

Examples of the cellulose-based viscosity modifier include cellulose acetate butyrate (CAB), carboxymethyl cellulose, methyl cellulose, hydroxyethyl cellulose, hydroxyethyl methyl cellulose, hydroxypropyl methyl cellulose, methyl cellulose, and cellulose nanofiber gel. These are used singly or two or more of them are used in combination. Among them, CAB is preferable.

The amount of the viscosity modifier is not limited. The amount of the viscosity modifier may be, for example, 0.1 parts by mass or more and 10 parts by mass or less, 0.5 parts by mass or more and 5 parts by mass or less, or 1.0 parts by mass or more and 3.0 parts by mass or less, based on 100 parts by mass of the glitter pigment dispersion. Thus, the disturbance of the arrangement of the glitter pigment is easily inhibited.

### (Second resin)

The glitter coating film may contain a resin component (second resin). The second resin includes, for example, a cured product of a thermosetting resin similar to that of the first resin. However, the amount of the second resin is desirably small. The small amount of the second resin facilitates thinning of the glitter coating film. When the glitter coating film is thin, disturbance of the orientation of the glitter pigment is easily inhibited, and the glitter pigment is easily arrayed in parallel with the surface of the coating film.

The amount of the second resin is preferably 15% by mass or less of the glitter pigment dispersion in that a thin glitter coating film is easily formed, more preferably 10% by mass or less, and particularly preferably 5% by mass or less.

### (Others)

The glitter coating film may contain other pigments other than the glitter pigment depending on the hiding property and the like. Examples of such other pigments include rust-proof pigments, coloring pigments (including white pigments), and the extender pigments described above. Among them, the glitter coating film may contain a white pigment (especially, titanium dioxide). The content of the other pigments (especially, titanium dioxide) is preferably 10% by mass or less of the glitter pigment dispersion in that the scaly glitter pigment is easily arrayed in parallel with the coating film, and preferably 2% by mass or less. The content of the other pigments (especially, titanium dioxide) may be 0.01% by mass or more, or 0.1% by mass or more of the glitter pigment dispersion.

The glitter coating film may contain various additives, as necessary. Examples of the additives include ultraviolet absorbers, antioxidants, antifoaming agents, antisettling agents, dispersants, and surface conditioning agents.

### <Clear coating film>

The clear coating film protects the colored coating film and the glitter coating film. The clear coating film is not limited, and has the same configuration as that of a conventionally known clear coating film.

The thickness of the clear coating film is not limited. From the viewpoint of scratch resistance, the thickness of the clear coating film is preferably 10 µm or more, and more preferably 15 µm or more. The thickness of the clear coating film may be 50 µm or less, or 40 µm or less in that whiteness and the metallic texture are hardly impaired.

### (Third resin)

The clear coating film contains, for example, a third resin. The third resin preferably contains a cured product of a third thermosetting resin. Specifically, the third resin is obtained by curing a third thermosetting resin formed of a crosslinkable functional group and a base resin. For the curing, a second curing agent may be used.

Examples of the third thermosetting resin include resins the same as those recited as examples of the first thermosetting resin. The Tg of the third resin is not limited. From the viewpoint of the hardness and smoothness of a coating film, the Tg of the third resin is preferably -40°C or more and 20°C or less, and more preferably - 30°C or more and 10°C or less.

### (Others)

The clear coating film may comprise a pigment as long as transparency is not impaired. The pigment is not limited, and conventionally publicly-known pigments may be used singly or two or more of them may be used in combination. The amount of the pigment added is not limited. The amount of the pigment added is, for example, 30 parts by mass or less based on 100 parts by mass of the solid content of the third resin, and may be 0.01 parts by mass or more and 10 parts by mass or less.

The clear coating film may contain various additives, as necessary. Examples of the additives include ultraviolet absorbers, antioxidants, antifoaming agents, surface conditioning agents, and pinhole inhibitors.

Fig. 2 is a sectional view schematically illustrating an automobile body according to the present embodiment. The automobile body 100 includes an article to be coated 10 and a multilayer coating film 20. The multilayer coating film 20 includes a colored coating film 21, a glitter coating film 22, and a clear coating film 23 in this order. The glitter coating film 22 contains a glitter pigment 221.

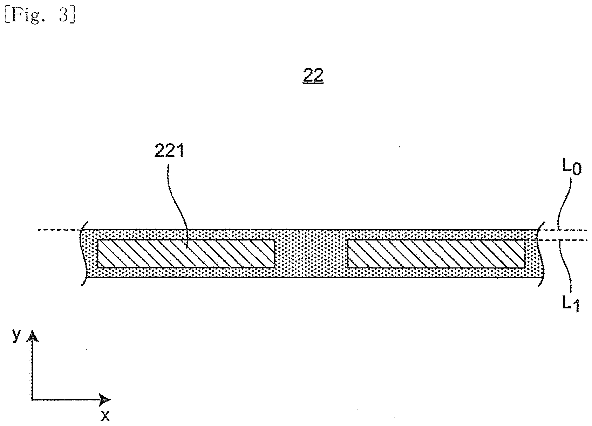

Fig. 3 is a sectional view schematically illustrating a glitter coating film in the present embodiment. In the illustrated example, an acute angle formed by the approximate straight line L₀ of the surface of the glitter coating film 22 and the approximate straight line L₁ of the surface of the glitter pigment 221 is approximately 0 degrees. That is, the glitter pigment 221 is parallel to the surface of the glitter coating film 22.

### B. Method for manufacturing automobile body

An automobile body is manufactured by forming a colored coating film, a glitter coating film, and a clear coating film in this order on an article to be coated. When the glitter coating film is formed, the colored coating film may have been either cured or uncured. When the clear coating film is formed, the glitter coating film may have been either cured or uncured. In particular, from the viewpoint of productivity, adhesion, and water resistance, it is preferable that the respective coating films are laminated without being cured, and then heated to simultaneously cure the three uncured coating films.

In the present description, curing is a concept including solidification. That is, curing referred to in the present description means that a coating film loses fluidity regardless of whether or not it is accompanied by a chemical reaction. Specifically, curing referred to in the present description has the same meaning as "curing and drying" defined in JIS K 5500 (Glossary of terms for coating materials). That is, curing means a) when the center of a test piece is strongly sandwiched between the thumb and the forefinger, no dent due to the fingerprint is formed on the coating surface and no movement of the coating film is noticed, and when the coating surface is rapidly rubbed repeatedly with the fingertip, the coating surface is in a dry hard state in which no scratch marks are formed. The uncured state referred to in the present description is a state other than the above-described cured state, and includes a semi-cured state.

The automobile body is preferably manufactured by the following method. That is, the method for manufacturing an automobile body includes: a step of applying a colored coating material to an article to be coated to form an uncured colored coating film, a step of applying a glitter pigment dispersion to the uncured colored coating film to form an uncured glitter coating film, a step of applying a clear coating material to the uncured glitter coating film to form an uncured clear coating film, and a step of curing the uncured colored coating film, the uncured glitter coating film, and the uncured clear coating film to obtain a multilayer coating film.

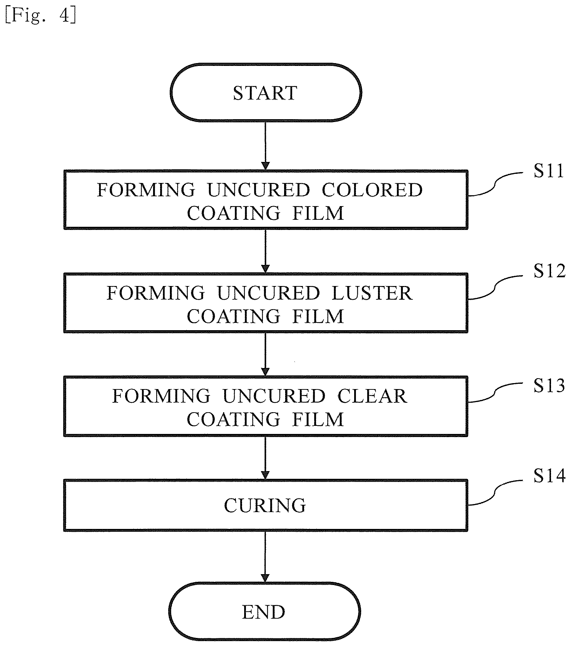

Fig. 4 is a flowchart showing the method of manufacturing an automobile body according to the present embodiment.

The lightness L*45 based on the spectral reflectance attained when light IC₄₅ applied at an angle of 45 degrees with respect to the surface of the multilayer coating film to be formed is received at an angle of 45 degrees with respect to regularly-reflected light is 70 or more and 80 or less. A ratio of a lightness L*5 based on a spectral reflectance attained when the light I₄₅ is received at an angle of 15 degrees with respect to regularly-reflected light to a lightness L*15 based on a spectral reflectance attained when the light I₄₅ is received at an angle of 15 degrees with respect to regularly-reflected light, L*5/L*15, is 1.2 or more and 2.5 or less. The occupancy of the glitter pigment as viewed from the surface of the multilayer coating film is 10% or more and 30% or less. The graininess G on the surface of the multilayer coating film is 1.0 or more and 3.0 or less.

### (1) Step of forming uncured colored coating film (S11)

A colored coating material (X) is applied to an article to be coated to form an uncured colored coating film.

The applying method is not limited. Examples of the applying method include air spray coating, airless spray coating, rotary atomization coating, and curtain coating. These methods may be combined with electrostatic coating. Among them, rotary atomization type electrostatic coating is preferable from the viewpoint of coating efficiency. For the rotary atomization type electrostatic coating, for example, a rotary atomization type electrostatic coating machine commonly called "micro micro bell (µµ bell)", "micro bell (µ bell)", "metallic bell", or the like is used.

The application amount of the colored coating material (X) is not limited. The colored coating material (X) is applied, for example, such that the thickness of the colored coating film after curing is 15 µm or more and 50 µm or less.

After the colored coating material (X) is applied, preliminary drying (also referred to as preheating) may be carried out. Thus, the solvent contained in the colored coating film is inhibited from bumping in the curing step, so that the occurrence of bubbles is likely to be inhibited. Further, the preliminary drying inhibits the mixing of the uncured colored coating film and the glitter pigment dispersion, so that a mixed layer is hardly formed. Therefore, the appearance of a resulting multilayer coating film is likely to be improved.

Conditions for the preliminary drying are not limited. Examples of the preliminary drying include a method in which the item to be dried is left standing for 15 minutes or more and 30 minutes or less under a temperature condition of 20°C or more and 25°C or less, and a method in which the item to be dried is heated for 30 seconds or more and 10 minutes or less under a temperature condition of 50°C or more and 100°C or less.

### <Colored coating material (X)>

The colored coating material (X) contains the white pigment and the first thermosetting resin. The colored coating material (X) includes a first curing agent, a first solvent, and various additives, and the like, as necessary. The colored coating material (X) is prepared by diluting a mixture of the white pigment, the first thermosetting resin, the first curing agent, the various additives, and the like with the first solvent. The colored coating material (X) may be either a one-pack coating material or a multi-pack coating material such as a two-pack coating material.

The viscosity of the colored coating material (X) is not limited. The viscosity of the colored coating material (X) measured with a B-type viscometer at 20°C is, for example, 500 cps/6 rpm or more and 6000 cps/6 rpm or less.

The solid content of the colored coating material (X) is not limited. The solid content of the colored coating material (X) is preferably 30% by mass or more and 70% by mass or less. The solid of the colored coating material (X) is all components of the colored coating material (X) excluding the first solvent.

### (First thermosetting resin)

The first thermosetting resin is formed of a crosslinkable functional group and a base resin. The details of the crosslinkable functional group and the base resin are as described above.

The amount of the first thermosetting resin is not limited. When the first curing agent is contained, the solid mass of the first thermosetting resin is preferably 60% by mass or more and 90% by mass or less, and more preferably 70% by mass or more and 85% by mass or less of the total of the solid mass of the first thermosetting resin and the solid mass of the first curing agent.

### (First curing agent)

The first curing agent is not limited, and may be appropriately selected according to the first thermosetting resin. Examples of the first curing agent include an amino resin, a urea resin, a polyisocyanate compound, an epoxy group-containing compound, a carboxy group-containing compound, a carbodiimide group-containing compound, a hydrazide group-containing compound, and a semicarbazide group-containing compound. The polyisocyanate compound includes a blocked polyisocyanate compound in which an isocyanate group is blocked with a blocking agent. These are used singly or two or more of them are used in combination. Among them, an amino resin and a polyisocyanate compound are preferable from the viewpoint of various performance and cost of a resulting coating film. The amino resin is obtained, for example, by condensing an amino compound such as melamine, benzoguanamine, or urea with formaldehyde, and further etherifying the condensate with a lower monohydric alcohol. The details of the polyisocyanate compound will be described later.

The amount of the first curing agent is not limited. From the viewpoint of curability, the solid mass of the first curing agent is preferably 10% by mass or more and 40% by mass or less, more preferably 15% by mass or more and 30% by mass or less, and particularly preferably 15% by mass or more and 25% by mass or less of the total of the solid mass of the first thermosetting resin and the solid mass of the first curing agent.

### (First solvent)

The first solvent is not limited. The first solvent may be water (deionized water), an organic solvent, or a combination thereof. Among them, water is preferable from the viewpoint of low volatile organic compounds (VOC). The proportion of water in the first solvent is preferably 50% by mass or more, and preferably 80% by mass or more.

### Examples of the organic solvent include

ester-based solvents such as ethyl acetate, butyl acetate, isopropyl acetate, ethylene glycol monoethyl ether acetate, propylene glycol monomethyl ether acetate, and propylene glycol monoethyl ether acetate;
ether-based solvents such as propylene glycol monomethyl ether, ethylene glycol monomethyl ether, methylmethoxybutanol, ethoxypropanol, ethylene glycol isopropyl ether, ethylene glycol-t-butyl ether, ethylene glycol monoethyl ether, ethylene glycol monobutyl ether, methoxybutanol, and propylene glycol monobutyl ether; alcohol-based solvents such as methanol, ethanol, butanol, and propyl alcohol; ketone-based solvents such as acetone, methyl ethyl ketone, and methyl isobutyl ketone; aliphatic hydrocarbon-based solvents such as Swasol, ShellSol, and Mineral Spirit; and aromatic solvents such as xylene, toluene, Solvesso-100 (S-100), and Solvesso-150 (S-150). These are used singly or two or more of them are used in combination.

The amount of the first solvent is not limited, and is appropriately set according to the solid content, viscosity, and the like of the colored coating material (X). The first solvent is added such that, for example, the solid content of the colored coating material (X) is 30% by mass or more and 70% by mass or less and the viscosity of the colored coating material (X) measured with a B-type viscometer at 20°C is 500 cps/6 rpm or more and 6,000 cps/6 rpm or less.

When water is used as the first solvent, a first thermosetting resin having a hydrophilic group may be used. By neutralizing the hydrophilic group of the first thermosetting resin to form an alkali salt, the first thermosetting resin is made water-soluble or water-dispersible. Examples of the hydrophilic group include a carboxy group, a hydroxy group, a methylol group, an amino group, a sulfonic acid group, and a polyoxyethylene linkage. Examples of the neutralizing agent include alkaline substances such as sodium hydroxide and amine compounds.

The first thermosetting resin can be prepared in a state in which the first thermosetting resin is dispersed in water by subjecting the starting material monomers of the first thermosetting resin to emulsion polymerization in the presence of a surfactant or a water-soluble resin. Alternatively, the first thermosetting resin may be dispersed in water with an emulsifier. In these cases, the first thermosetting resin may not contain a hydrophilic group, or may slightly contain a hydrophilic group.

### (Others)

The colored coating material (X) also contains the pigments and various additives recited as examples of those contained in the colored coating film.

### (2) Step of forming uncured glitter coating film (S12)

The glitter pigment dispersion (Y) is applied to the uncured colored coating film to form an uncured glitter coating film.

The applying method is not limited. Examples of the applying method include the same methods as the method of applying the colored coating material. Among them, rotary atomization type electrostatic coating is preferable from the viewpoint of coating efficiency.

The application amount of the glitter pigment dispersion (Y) is not limited. The glitter pigment dispersion (Y) is applied, for example, such that the thickness of the glitter coating film in the resulting multilayer coating film is 0.05 µm or more and 1.0 µm or less.

After the glitter pigment dispersion (Y) is applied, preliminary drying may be performed. Thus, the fluidity of the glitter coating film rapidly decreases, and the flow of the glitter pigment is also likely to be inhibited. Conditions for the preliminary drying are not limited, and may be the same as those for the preliminary drying of the colored coating film.

### <Glitter pigment dispersion (Y)>

The glitter pigment dispersion (Y) contains a glitter pigment. The glitter pigment dispersion (Y) contains a viscosity modifier, a second solvent, and the like, as necessary. The glitter pigment dispersion (Y) is prepared by diluting the glitter pigment and further a mixture of the viscosity modifier and various additives with the second solvent.

The viscosity of the glitter pigment dispersion (Y) is not limited. The viscosity of the glitter pigment dispersion (Y) is preferably a viscosity 20 cps/6 rpm or more and 3,000 cps/6 rpm or less as measured by a B-type viscometer at 20°C from the viewpoint of easily inhibiting the disturbance of the arrangement of the glitter pigment.

The solid content of the glitter pigment dispersion (Y) is preferably 0.1% by mass or more and 10.0% by mass or less. Thus, a thin glitter coating film is easily formed. The solid content of the glitter pigment dispersion (Y) is preferably 9.0% by mass or less, more preferably 8.0% by mass or less, and particularly preferably 7.5% by mass or less. The solid of the glitter pigment dispersion (Y) is all components of the glitter pigment dispersion (Y) excluding the second solvent.

In particular, when the glitter pigment dispersion (Y) is aqueous, namely, when the second solvent contains 50% by mass or more of water, the solid content of the glitter pigment dispersion (Y) is preferably 3.5% by mass or more, more preferably 4.0% by mass or more, and particularly preferably 4.5% by mass or more. When the second solvent contains water in an amount of 50% by mass or more, the solid content of the glitter pigment dispersion (Y) is preferably 8.5% by mass or less, more preferably 8.0% by mass or less, and particularly preferably 7.5% by mass or less.

When the glitter pigment dispersion (Y) is solvent-based, namely, when the second solvent contains 50% by mass or more of an organic solvent, the solid content of the glitter pigment dispersion (Y) is preferably 1.0% by mass or more, and more preferably 2.0% by mass or more. When the second solvent contains the organic solvent in an amount of 50% by mass or more, the solid content of the glitter pigment dispersion (Y) is preferably 5.0% by mass or less, and more preferably 3.5% by mass or less.

### (Glitter pigment)

The details of the glitter pigment are as described above.

The amount of the glitter pigment is not limited. The amount of the glitter pigment may be, for example, 0.05% by mass or more and 3.0% by mass or less, 0.2% by mass or more and 1.5% by mass or less, or 0.3% by mass or more and 0.8% by mass or less of the glitter pigment dispersion (Y). Thus, the occupancy of the glitter pigment tends to be 10% or more and 30% or less.

### (Viscosity modifier)

The details of the viscosity modifier are as described above.

The amount of the viscosity modifier is preferably 1% by mass or more and 50% by mass or less, and more preferably 10% by mass or more and 30% by mass or less of the glitter pigment dispersion (Y). Thus, the disturbance of the arrangement of the glitter pigment is easily inhibited.

### (Second solvent)

The second solvent is not limited. The second solvent may be water, an organic solvent, or a combination thereof. Among them, water is preferable from the viewpoint of low VOC. The proportion of water in the second solvent is preferably 50% by mass or more, and preferably 80% by mass or more. Examples of the organic solvent to be used as the second solvent include the same organic solvents as those recited as examples as the first solvent.

The amount of the second solvent is not limited, and is appropriately set according to the solid content, viscosity, and the like of the glitter pigment dispersion (Y). The second solvent is added such that, for example, the solid content of the glitter pigment dispersion (Y) is 0.1% by mass or more and 10.0% by mass or less and the viscosity of the glitter pigment dispersion (Y) measured with a B-type viscometer at 20°C is 20 cps/6 rpm or more and 3,000 cps/6 rpm or less.

### (Others)

The glitter pigment dispersion (Y) also contains the various additives recited as examples of those contained in the glitter coating film.

For example, the dispersant is added to enhance the dispersibility of the glitter pigment. The dispersant is not limited, and is appropriately selected according to the second solvent, the glitter pigment, and the like.

When the glitter pigment dispersion (Y) is aqueous, for example, inorganic type dispersants, such as phosphate salts and polyphosphate salts; polymer type dispersants, such as polycarboxylic acid-based, polyethylene glycol-based, and naphthalenesulfonic acid-formalin condensation-based dispersants; low molecular type dispersants, such as alkylsulfonic acid-based, quaternary ammonium-based, and higher alcohol alkylene oxide-based dispersants are used. Examples of the phosphate salts include sodium hexametaphosphate, sodium pyrophosphate, and sodium phosphate.

When the glitter pigment dispersion (Y) is solvent-based, for example, a polymer type dispersant such as a polycarboxylic acid partial alkyl ester-based dispersant, a polyether-based dispersant, or a polyalkylene polyamine-based dispersant is used as the dispersant.

The amount of the dispersant is not limited. The amount of the dispersant may be, for example, 0.01% by mass or more and 3% by mass or less, or 0.1% by mass or more and 1.0% by mass or less of the glitter pigment dispersion (Y).

The surface conditioning agent is added to control the surface tension of the glitter coating film. Thus, the glitter pigment is easily arrayed in parallel with the coating film. Furthermore, adhesion between layers is improved.

The surface conditioning agent is not limited. Examples of the surface conditioning agent include silicone-based, acryl-based, vinyl-based, and fluorine-based surface conditioning agents. These are used singly or two or more of them are used in combination. Among them, a silicone-based surface conditioning agent is preferable from the viewpoint of brightness, water resistance, and the like of the glitter coating film. Examples of the silicone-based surface conditioning agent include polydimethylsiloxane and modified silicone prepared by modifying polydimethylsiloxane. Examples of the modified silicone include a polyether-modified product, an acryl-modified product, and a polyester-modified product.

Examples of the commercially available surface conditioning agent include BYK series (manufactured by BYK Japan KK), Tego series (manufactured by Evonik Industries AG), Glanol series and Polyflow series (both manufactured by Kyoeisha Chemical Co., Ltd.), and DISPARLON series (manufactured by Kusumoto Chemicals, Ltd.).

The amount of the surface conditioning agent is not limited. The amount of the surface conditioning agent is preferably 0.1% by mass or more and 10% by mass or less, more preferably 0.2% by mass ore more and 8% by mass or less, and particularly preferably 0.4% by mass or more and 6% by mass or less of the glitter pigment dispersion (Y). When the amount of the surface conditioning agent is within this range, the surface tension of the glitter coating film is reduced, and the wettability of the glitter pigment dispersion (Y) to the uncured colored coating film is easily improved.

### (3) Step of forming uncured clear coating film (S13)

A clear coating material (Z) is applied to the glitter coating film to form an uncured clear coating film.

The applying method is not limited. Examples of the applying method include the same methods as the method of applying the colored coating material. Among them, rotary atomization type electrostatic coating is preferable from the viewpoint of coating efficiency.

The amount of the clear coating material (Z) applied is not limited. The clear coating material (Z) is applied, for example, such that the thickness of the clear coating film after curing is 25 µm or more and 45 µm or less.

### <Clear coating material (Z)>

The clear coating material (Z) is not limited, and a conventionally known clear coating material can be used. The form of the clear coating material (Z) is also not limited. The clear coating material (Z) may be a powder, an aqueous system, or a solvent-based system.

The clear coating material (Z) contains the third thermosetting resin described above. The clear coating material (Z) contains a second curing agent, a third solvent, and various additives, and the like, as necessary. The clear coating material (Z) is prepared by diluting a mixture of the third thermosetting resin, the second curing agent, the various additives, and the like with the third solvent. The clear coating material (Z) may be either a one-pack coating material or a multi-pack coating material such as a two-pack coating material.

The viscosity of the clear coating material (Z) is not limited. The viscosity of the clear coating material (Z) measured with a B-type viscometer at 20°C is, for example, 500 cps/6 rpm or more and 6000 cps/6 rpm or less.

The solid content of the clear coating material (Z) is not limited. The solid content of the clear coating material (Z) is, for example, 40% by mass or more and 60% by mass or less.

### (Third thermosetting resin)

The third thermosetting resin is formed of a crosslinkable functional group and a base resin. The details of the crosslinkable functional group and the base resin are as described above.

The one-pack clear coating material (Z) contains, for example, a polyepoxide and a polyacid as the third thermosetting resin. Specifically, the one-pack clear coating material (Z) contains, as the third thermosetting resin, an acrylic resin (1) containing an acid anhydride group, a polyester resin (2) containing a carboxy group, and an acrylic resin (3) containing a hydroxy group and an epoxy group. From the viewpoint of storage stability, the acid anhydride group of the acrylic resin (1) may have been half-esterified with a low molecular weight alcohol or the like. Hereinafter, such a third thermosetting resin is referred to as an acid-epoxy curable resin composition. The acid-epoxy curable resin composition easily increases the solid content of the clear coating material (Z). Furthermore, when the acid-epoxy curable resin composition is used, a clear coating film superior in acid resistance is easily obtained.

In the acid-epoxy curable resin composition, curing proceeds as the above three polymers react with each other. The curing mechanism of the acid-epoxy curable resin composition is as follows. First, an acid anhydride group in the acrylic resin (1) reacts with hydroxy groups in the polyester resin (2) and the acrylic resin (3) on heating to form a carboxy group. This carboxy group and a carboxy group in the polyester resin (2) react with the epoxy group existing in the acrylic resin (3) to form a crosslinking point. A crosslinking reaction occurs from this crosslinking point as a starting point.

The compounding of the acrylic resin (1), the polyester resin (2), and the acrylic resin (3) is not limited. The compounding of the acid-epoxy curable resin composition is carried out in amounts and by a method well known to those skilled in the art.

In particular, the molar ratio of the carboxy groups of the acrylic resin (1) and the polyester resin (2) to the epoxy groups of the acrylic resin (3) is preferably 1/1.4 or more and 1/0.6 or less, and more preferably 1/1.2 or more and 1/0.8 or less. Thus, the drying property of the clear coating material (Z) is easily improved. Furthermore, a clear coating film that hardly turns yellow is likely to be obtained.

The molar ratio of the carboxy groups of the acrylic resin (1) to the hydroxy groups of the polyester resin (2) and the acrylic resin (3) is preferably 1/2. 0 or more and 1/0.5 or less, and more preferably 1/1.5 or more and 1/0.7 or less. Thus, the drying property of the clear coating material (Z) is easily improved. Furthermore, a clear coating film superior in water resistance is easily obtained.

The two-pack clear coating material (Z) is preferable in that the physical properties of the coating film are easily improved. The two-pack clear coating material (Z) contains the separated third thermosetting resin and second curing agent. The third thermosetting resin and the second curing agent are mixed immediately before use. Examples of the combination of the third thermosetting resin and the second curing agent include carboxy group-containing resin/epoxy group-containing resin, hydroxy group-containing resin/polyisocyanate compound, hydroxy group-containing resin/blocked isocyanate compound, and hydroxy group-containing resin/melamine resin. These are suitable particularly for forming a clear coating film.

Among them, it is preferable that the two-pack clear coating material (Z) contains a hydroxy group-containing resin as the third thermosetting resin and contains a polyisocyanate compound as the second curing agent in that the physical properties of the coating film are easily improved.

Examples of the hydroxy group-containing resin specifically include a hydroxy group-containing acrylic resin, a hydroxy group-containing polyester resin, a hydroxy group-containing polyether resin, and a hydroxy group-containing polyurethane resin. Among them, the hydroxy group-containing acrylic resin and the hydroxy group-containing polyester resin are preferable, and the hydroxy group-containing acrylic resin is particularly preferable. These are used singly or two or more of them are used in combination.

The hydroxyl value of the hydroxy group-containing acrylic resin is not limited. From the viewpoint of the scratch resistance and water resistance of the coating film, the hydroxyl value of the hydroxy group-containing acrylic resin is preferably 80 mg KOH/g or more and 200 mg KOH/g or less, and more preferably 100 mg KOH/g or more and 180 mg KOH/g or less.

The weight average molecular weight of the hydroxy group-containing acrylic resin is not limited. From the viewpoint of the acid resistance and smoothness of the coating film, the weight average molecular weight of the hydroxy group-containing acrylic resin is preferably 2,500 or more and 40,000 or less, and more preferably 5,000 or more and 30,000 or less. The weight average molecular weight can be calculated based on the molecular weight of standard polystyrene from a chromatogram measured with a gel permeation chromatograph. As the gel permeation chromatograph, for example, HLC8120GPC (manufactured by Tosoh Corporation) is used. As a column, TSKgel G-4000HXL, TSKgel G-3000HXL, TSKgel G-2500HXL, and TSKgel G-2000HXL (all manufactured by Tosoh Corporation) are used. The chromatography is performed, for example, using tetrahydrofuran as a mobile phase and a differential refractive index detector (RI) as a detector under the conditions of a measurement temperature of 40°C and a flow rate of 1 cc/min.

### (Second curing agent)

The second curing agent is not limited, and may be appropriately selected according to the third thermosetting resin. Examples of the second curing agent include the same curing agents as those recited as examples as the first curing agent.

The polyisocyanate compound has at least two isocyanate groups in one molecule. Examples of the polyisocyanate compound include aliphatic polyisocyanates, alicyclic polyisocyanates, aliphatic polyisocyanates having an aromatic ring not bonded to an isocyanate group in the molecule (araliphatic polyisocyanates), aromatic polyisocyanates, and derivatives of these polyisocyanates.

Examples of the aliphatic polyisocyanate include aliphatic diisocyanates such as trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate, dimer acid diisocyanate, and methyl 2,6-diisocyanatohexanoate (common name: lysine diisocyanate); and aliphatic triisocyanates such as 2-isocyanatoethyl 2,6-diisocyanatohexanoate, 1,6-diisocyanato-3-isocyanatomethylhexane, 1,4,8-triisocyanatooctane, 1,6,11-triisocyanatoundecane, 1,8-diisocyanato-4-isocyanatomethyloctane, 1,3,6-triisocyanatohexane, and 2,5,7-trimethyl-1,8-diisocyanato-5-isocyanatomethyloctane.

Examples of the alicyclic polyisocyanate include alicyclic diisocyanates such as 1,3-cyclopentene diisocyanate, 1,4-cyclohexane diisocyanate, 1,3-cyclohexane diisocyanate, 3-isocyanatomethyl-3,5,5-trimethylcyclohexyl isocyanate (common name: isophorone diisocyanate), 4-methyl-1,3-cyclohexylene diisocyanate (common name: hydrogenated TDI), 2-methyl-1,3-cyclohexylene diisocyanate, 1,3- or 1,4-bis(isocyanatomethyl)cyclohexane (common name: hydrogenated xylylene diisocyanate) or a mixture thereof, methylenebis(4,1-cyclohexanediyl) diisocyanate (common name: hydrogenated MDI), norbornane diisocyanate, and 4,4'-methylenebis(cyclohexyl isocyanate); and alicyclic triisocyanates such as 1,3,5-triisocyanatocyclohexane, 1,3,5-trimethylisocyanatocyclohexane, 2-(3-isocyanatopropyl)-2,5-di(isocyanatomethyl)-bicyclo(2.2.1)heptane, 2-(3-isocyanatopropyl)-2,6-di(isocyanatomethyl)-bicyclo(2.2.1)heptane, 3-(3-isocyanatopropyl)-2,5-di(isocyanatomethyl)-bicyclo(2.2.1)heptane, 5-(2-isocyanatoethyl)-2-isocyanatomethyl-3-(3-isocyanatopropyl)-bicyclo(2.2.1)heptane, 6-(2-isocyanatoethyl)-2-isocyanatomethyl-3-(3-isocyanatopropyl)-bicyclo(2.2.1)heptane, 5-(2-isocyanatoethyl)-2-isocyanatomethyl-2-(3-isocyanatopropyl)-bicyclo(2.2.1)-heptane, and 6-(2-isocyanatoethyl)-2-isocyanatomethyl-2-(3-isocyanatopropyl)-bicyclo(2.2.1)heptane.

Examples of the araliphatic polyisocyanate include araliphatic diisocyanates such as methylenebis(4,1-phenylene) diisocyanate (common name: MDI), 1,3- or 1,4-xylylene diisocyanate or a mixture thereof, ω,ω'-diisocyanato-1,4-diethylbenzene, 1,3- or 1,4-bis(1-isocyanato-1-methylethyl)benzene (common name: tetramethylxylylene diisocyanate) or a mixture thereof; and araliphatic triisocyanates such as 1,3,5-triisocyanatomethylbenzene.

Examples of the aromatic polyisocyanate include aromatic diisocyanates such as m-phenylene diisocyanate, p-phenylene diisocyanate, 4,4'-diphenyl diisocyanate, 1,5-naphthalene diisocyanate, 2,4-tolylene diisocyanate (common name: 2,4-TDI) or 2,6-tolylene diisocyanate (common name: 2,6-TDI) or a mixture thereof, 4,4'-toluidine diisocyanate, and 4,4'-diphenyl ether diisocyanate; aromatic triisocyanates such as triphenylmethane-4,4',4"-triisocyanate, 1,3,5-triisocyanatobenzene, and 2,4,6-triisocyanatotoluene; and aromatic tetraisocyanates such as 4,4'-diphenylmethane-2,2',5,5'-tetraisocyanate.

Examples of the derivative of polyisocyanate include dimer, trimer, biuret, allophanate, uretdione, uretimine, isocyanurate, oxadiazinetrione, polymethylene polyphenyl polyisocyanate (crude MDI, polymeric MDI), and crude TDI of the polyisocyanate described above.

Such polyisocyanate compounds are used singly or two or more of them are used in combination.

Among them, from the viewpoint of adhesiveness, compatibility, and the like, hexamethylene diisocyanate and 4,4'-methylenebis(cyclohexyl isocyanate) are preferable, and derivatives of hexamethylene diisocyanate are more preferable.

As the polyisocyanate compound, a prepolymer of the polyisocyanate described above or a derivative thereof may be used. The prepolymer is obtained by reacting a polyisocyanate or a derivative thereof with a compound capable of reacting with the polyisocyanate or the derivative thereof under conditions such that isocyanate groups are present in excess. The compound capable of reacting with the polyisocyanate or the derivative thereof is a compound having an active hydrogen group such as a hydroxy group or an amino group. Examples of the compound include polyhydric alcohols, low molecular weight polyester resins, amines, and water.

As the polyisocyanate compound, a blocked polyisocyanate compound may be used. The blocked polyisocyanate compound is obtained by blocking an isocyanate group in the polyisocyanate or a derivative thereof with a blocking agent.

Examples of the blocking agent include a phenol compound, a lactam compound, an alcohol, an ether, an oxime compound, a compound having an active methylene group, a mercaptan compound, an acid amide compound, an imide compound, an amine compound, an imidazole compound, a urea compound, a carbamic acid ester, an imine compound, a sulfite salt, an azole compound, and a ketone compound.

Examples of the phenol compound include phenol, cresol, xylenol, nitrophenol, ethylphenol, hydroxydiphenyl, butylphenol, isopropylphenol, nonylphenol, octylphenol, and methyl hydroxybenzoate.

Examples of the lactam compound include ε-caprolactam, δ-valerolactam, γ-butyrolactam, and β-propiolactam.

Examples of the alcohol include methanol, ethanol, propyl alcohol, butyl alcohol, amyl alcohol, lauryl alcohol, benzyl alcohol, glycolic acid, methyl glycolate, ethyl glycolate, butyl glycolate, lactic acid, methyl lactate, ethyl lactate, butyl lactate, methylol urea, methylol melamine, diacetone alcohol, 2-hydroxyethyl acrylate, and 2-hydroxyethyl methacrylate.

Examples of the ether include ethylene glycol monomethyl ether, ethylene glycol monoethyl ether, ethylene glycol monobutyl ether, diethylene glycol monomethyl ether, diethylene glycol monoethyl ether, propylene glycol monomethyl ether, and methoxymethanol.

Examples of the oxime compound include formamide oxime, acetamide oxime, acetoxime, methyl ethyl ketoxime, diacetyl monoxime, benzophenone oxime, and cyclohexanoxime.

Examples of the compound having an active methylene group include dimethyl malonate, diethyl malonate, ethyl acetoacetate, methyl acetoacetate, and acetylacetone.

Examples of the mercaptan compound include butyl mercaptan, t-butyl mercaptan, hexyl mercaptan, t-dodecyl mercaptan, 2-mercaptobenzothiazole, thiophenol, methylthiophenol, and ethylthiophenol.

Examples of the acid amide compound include acetanilide, acetanisidide, acetotoluide, acrylamide, methacrylamide, acetic acid amide, stearic acid amide, and benzamide.

Examples of the imide compound include succinimide, phthalimide, and maleimide.

Examples of the amine compound include diphenylamine, phenylnaphthylamine, xylidine, N-phenylxylidine, carbazole, aniline, naphthylamine, butylamine, dibutylamine, and butylphenylamine.

Examples of the imidazole compound include imidazole and 2-ethylimidazole.

Examples of the urea compound include urea, thiourea, ethylene urea, ethylene thiourea, and diphenyl urea.

Examples of the carbamic acid ester include phenyl N-phenylcarbamate.

Examples of the imine compound include ethyleneimine and propyleneimine.

Examples of the sulfite salt include sodium bisulfite and potassium bisulfite.

Examples of the azole compound include pyrazoles or pyrazole derivatives such as pyrazole, 3,5-dimethylpyrazole, 3-methylpyrazole, 4-benzyl-3,5-dimethylpyrazole, 4-nitro-3,5-dimethylpyrazole, 4-bromo-3,5-dimethylpyrazole, and 3-methyl-5-phenylpyrazole; imidazole or imidazole derivatives such as imidazole, benzimidazole, 2-methylimidazole, 2-ethylimidazole, and 2-phenylimidazole; and imidazoline derivatives such as 2-methylimidazoline and 2-phenylimidazoline.

Examples of the ketone compound include methyl ethyl ketone and methyl isobutyl ketone.

Examples of commercially available blocked isocyanate compounds include DURANATE (blocked hexamethylene diisocyanate) series (manufactured by Asahi Kasei Corporation), SUMIDUR BL3175, DESMODUR BL3272MPA, DESMODUR BL3475 BA/SN, DESMODUR BL3575/1 MPA/SN, DESMODUR BL4265 SN, DESMODUR BL5375 MPA/SN, and DESMODUR VP LS2078/2 (each manufactured by Bayer AG).

The equivalent ratio (= OH/NCO) of the hydroxy group of the hydroxy group-containing resin to the isocyanate group of the polyisocyanate compound is not limited. From the viewpoint of curability, scratch resistance, etc. of the coating film, the equivalent ratio (= OH/NCO) is preferably 0.5 or more and 2.0 or less, and more preferably 0.8 or more and 1.5 or less.

### (Third solvent)

The clear coating material (Z) includes a third solvent, as necessary.

The third solvent is not limited. The third solvent may be water, an organic solvent, or a combination thereof. Among them, water is preferable from the viewpoint of low VOC. The proportion of water in the third solvent is preferably 50% by mass or more, and preferably 80% by mass or more. Examples of the organic solvent to be used as the third solvent include the same organic solvents as those recited as examples as the first solvent.

The amount of the third solvent is not limited, and is appropriately set according to the solid content, viscosity, etc. of the clear coating material (Z). The third solvent is added, for example, such that the solid content of the clear coating material (Z) is 30% by mass or more and 70% by mass or less.

### (4) Curing step (S14)

The uncured colored coating film, the uncured glitter coating film, and the uncured clear coating film are cured at one time. Each coating film can be cured by heating.

The heating conditions are appropriately set according to the composition and the like of the respective coating films. The heating temperature is, for example, 70°C or more and 150°C or less, and may be 80°C or more and 140°C or less. The heating time is, for example, 10 minutes or more and 40 minutes or less, and may be 20 minutes or more and 30 minutes or less. Examples of a heating device include drying furnaces such as a hot air oven, an electric oven, and an infrared induction heating oven.

In the following, the present invention will be described more specifically with reference to Examples and Comparative Examples. The present invention is not limited only to the Examples. Both "part" and "%" are on a mass basis.

### [Evaluation]

### (1) Lightness L*45, CL*45)

Using a variable angle color difference meter (Gonio-Spectrophotometer GSP-1, manufactured by MURAKAMI COLOR RESEARCH LABORATORY CO., LTD.), the spectral reflectance attained when light I₄₅ applied at an angle of 45 degrees with respect to the coating film was received at an angle of 45 degrees with respect to regularly-reflected light was measured. From this spectral reflectance, lightness L*45 or CL*45 in the L*a*b* color system was calculated. Average values of five different samples were taken as lightness L*45 or CL*45.

### (2) L*5/L*15

Using a variable angle color difference meter (Gonio-Spectrophotometer GSP-1, manufactured by MURAKAMI COLOR RESEARCH LABORATORY CO., LTD.), the spectral reflectances attained when light I₄₅ applied at an angle of 45 degrees with respect to the coating film was received at angles of 5 degrees and 15 degrees with respect to regularly-reflected light, respectively, were measured. From this spectral reflectance, lightness L*5 and lightness L*15 in the L*a*b* color system were calculated. Average values of five different samples were taken as lightness L*5 and lightness L*15. L*5/L*15 was calculated by dividing the lightness L*5 by the lightness L*15.

### (3) Graininess G

A graininess G was acquired using a multi-angle colorimeter (BYK-mac i, manufactured by BYK-Gardner GmbH). The average value of five different samples was taken as the graininess G.

### (4) Thickness of glitter coating film

The thickness of the glitter coating film was measured using an electromagnetic film thickness meter (FISCHERSCOPE (registered trademark) MMS PC2, manufactured by Fischer Instruments K.K.). The average value of five different samples was taken as the thickness of the glitter coating film.

### (5) Occupancy

The multilayer coating film was imaged from the normal direction thereof with an industrial microscope (ECLIPSE LV150N manufactured by NIKON Corporation), and a region corresponding to the glitter pigment and the other regions were binarized by image processing software. The area ratio of the glitter pigment was calculated with the area of the observation field as 100%. The magnification in imaging was set to 200 times. The observation field was 480 nm long and 720 nm wide. The average value in five different observation fields was taken as the occupancy.

### (6) Si₁₅ value

Using a multi-angle colorimeter (BYK-mac i, manufactured by BYK-Gardner GmbH), an image of light applied from a direction inclined by 15 degrees with respect to the normal direction of the multilayer coating film was captured from the normal direction of the multilayer coating film, and analyzed to obtain an Si₁₅ value. The average value of five different samples was taken as the Si₁₅ value.

### (7) Orientation of scaly glitter pigment

A section of the multilayer coating film was imaged with an industrial microscope (ECLIPSE LV150N manufactured by NIKON Corporation). The angle θ formed by the surface of the glitter coating film and the scaly glitter pigment in the observation field was calculated by the method described above. When the angle θ was 30 degrees or less, the surface of the glitter coating film and the scaly glitter pigment were determined to be parallel to each other.

### (8) Arrangement of glitter pigment

A section of the multilayer coating film was imaged with an industrial microscope (ECLIPSE LV150N manufactured by NIKON Corporation). The number of the overlapping glitter pigments in the observation field was calculated by the above method.

### [Example 1]

### (I) Preparation of article to be coated

A zinc phosphate-treated steel sheet with a cured electrodeposition coating film was prepared as an article to be coated. The cured electrodeposition coating film was formed by electrodeposition coating the zinc phosphate-treated steel sheet with "POWERNICS", which is a cationic electrodeposition coating composition manufactured by Nippon Paint Co., Ltd., such that a dry film thickness was 20 µm, and then heating at 160°C for 30 minutes.

### (II) Preparation of coating material

### (II-1) Preparation of colored coating material

The white pigment dispersion paste (130.5 parts), 73.9 parts of the hydroxy group-containing acrylic resin emulsion (30 parts in terms of resin solid content), and 60 parts of the hydroxy group-containing polyester resin (30 parts in terms of resin solid content), which had been prepared as described below, 100 parts of a hydroxy group-containing polyurethane resin (manufactured by Nippon Paint Automotive Coatings Co., Ltd.) (20 parts in terms of resin solid content), and 22.2 parts of CYMEL 327 (melamine resin manufactured by Nihon Cytec Industries Inc. ) as a first curing agent were mixed. Then, 40 parts of ion-exchanged water was added to the mixture and further mixed. Subsequently, 3.3 parts of Viscalex HV-30 (polycarboxylic acid-based viscosity modifier manufactured by BASF, nonvolatile content: 30%) as a viscosity modifier was added to the mixture, and the resulting mixture was further mixed and stirred, affording a colored coating material (X-1).

### (Production of white pigment dispersion paste)

After preliminarily mixing 4.5 parts of Disperbyk 190 (nonionic and anionic dispersant manufactured by BYK-Chemie) as a dispersant, 0.5 parts of BYK-011 (manufactured by BYK-Chemie) as an antifoaming agent, 22.9 parts of ion-exchanged water, and 72.1 parts of titanium dioxide, a glass bead medium was added into a paint conditioner, and mixed at room temperature until the secondary particle size of the titanium dioxide reached 5 µm or less, and thus a pigment dispersion paste was obtained.

### (Production of hydroxy group-containing acrylic resin emulsion)

A reaction vessel for the conventional production of an acrylic resin emulsion equipped with a stirrer, a thermometer, a dropping funnel, a reflux condenser, a nitrogen inlet tube, etc., is charged with 445 parts of water and 5 parts of Newcol 293 (manufactured by Nippon Nyukazai Co., Ltd.), which were then heated to 75°C with stirring. A mixture of a monomer mixture containing 145 parts of methyl methacrylate, 50 parts of styrene, 220 parts of ethyl acrylate, 70 parts of 2-hydroxyethyl methacrylate, and 15 parts of methacrylic acid, 240 parts of water, and 30 parts of Newcol 293 (manufactured by Nippon Nyukazai Co., Ltd.) was emulsified with a homogenizer, and thus a monomer pre-emulsified solution was obtained. The monomer pre-emulsified solution was added dropwise over 3 hours with stirring the inside of the reaction vessel. In parallel with the dropping of the monomer pre-emulsified solution, an aqueous solution prepared by dissolving 1 part of APS (ammonium persulfate) as a polymerization initiator in 50 parts of water was evenly dropped to the reaction vessel until the dropping of the monomer pre-emulsion was completed. After the completion of dropping the monomer pre-emulsified solution, the reaction was continued at 80°C for 1 hour. After cooling the reaction mixture, an aqueous solution prepared by dissolving 2 parts of dimethylaminoethanol in 20 parts of water was added to the reaction vessel, affording a hydroxy group-containing acrylic resin emulsion having a solid content of 40.6% by mass.

The solid component of the resulting hydroxy group-containing acrylic resin emulsion had an acid value of 20 mg KOH/g, a hydroxyl value of 60 mg KOH/g, and a glass transition temperature (Tg) of 30°C. The solid content was measured in accordance with JIS K 5601-1-2 Method for Measuring Non-Volatile Matter Content.

### (Production of hydroxy group-containing polyester resin)

To a reactor, 25.6 parts of isophthalic acid, 22.8 parts of phthalic anhydride, 5.6 parts of adipic acid, 19.3 parts of trimethylolpropane, 26.7 parts of neopentyl glycol, 17.5 parts of ε-caprolactone, and 0.1 parts of dibutyltin oxide were added and then heated to 170°C with mixing and stirring. Thereafter, while the reaction mixture was heated to 220°C over 3 hours, the water produced by the condensation reaction was removed until the acid value reached 8. Next, 7.9 parts of trimellitic anhydride was added to the reactor and reacted at 150°C for 1 hour, affording a polyester resin having an acid value of 40. Further, the polyester resin was cooled to 100°C, and then 11.2 parts of butyl cellosolve was added, and the mixture was stirred until uniform. Subsequently, the polyester resin was cooled to 60°C, and then 98.8 parts of ion-exchanged water and 5.9 parts of dimethylethanolamine were added. As a result, a hydroxy group-containing polyester resin having a solid content of 50% by mass was obtained. The solid component of the hydroxy group-containing polyester resin had an acid value of 40 mg KOH/g, a hydroxyl value of 110 mg KOH/g, a number-average molecular weight of 2870, and a glass transition temperature (Tg) of -3°C. The glass transition temperature (Tg) was measured using a differential scanning calorimeter (DSC220C) manufactured by Seiko Instruments Inc. (SII). The measurement conditions were a sample weight of 10 mg, a heating rate of 10°C/min, and a measurement temperature of -20°C to 100°C.

### (II-2) Preparation of glitter pigment dispersion

Deionized water was added to 1.05 parts of CAB, 0.16 parts of cellulose nanofibers, 0.16 parts of scaly aluminum particles A, 6.55 parts of aluminum-dissolved thinner, 0.51 parts of titanium dioxide, 1.49 parts of an acrylic resin, 1.08 parts of a thermosetting resin, 0.42 parts of phosphoric acid, 0.72 parts of an amine, and 0.51 parts of a defoaming agent such that the total amount was 100 parts, and the mixture was stirred, affording a glitter pigment dispersion (Y-1).

As the scaly aluminum particles A, trade name "EMR-D4670" manufactured by Toyo Aluminium K.K., thickness: 0.16 µm, average particle size: 8 µm was used. The solid content of the glitter pigment dispersion (Y-1) was 5.5%.

### (II-3) Preparation of clear coating material

PU Excel O-2100 (two-pack clear coating material manufactured by Nippon Paint Co., Ltd.) was prepared as a clear coating material (Z-1).

### (III) Step of forming uncured colored coating film

The colored coating material (X-1) was applied to an article to be coated using a metallic bell.

### (IV) Step of forming uncured glitter coating film

The glitter pigment dispersion (Y-1) was applied to the uncured colored coating film using a metallic bell.

### (V) Step of forming uncured clear coating film

The clear coating material (Z-1) was applied to the uncured glitter coating film using a micro micro bell.

### (VI) Curing step

After the step (V) of forming a clear coating film, the resultant was heated at 140°C for 20 minutes, affording an article to be coated having a multilayer coating film A1. In the multilayer coating film A1, the thickness of the colored coating film was 30 µm, and the monochrome hiding film thickness of the colored coating film was 60 µm. The glitter coating film had a thickness of 0.5 µm. The clear coating film had a thickness of 30 µm.

### (VII) Evaluation

The multilayer coating film A1 was subjected to the evaluations described above. The results of the evaluations (1) to (5) are shown in Table 1. Regarding the evaluation (6), the Si₁₅ value of the multilayer coating film A1 was 3.3. Regarding the evaluation (7) of the multilayer coating film A1, 80% or more of the scaly glitter pigment was arrayed in parallel with the surface of the glitter coating film. Regarding the evaluation (8) of the multilayer coating film A1, 80% or more of the scaly glitter pigment did not overlap other scaly glitter pigments.

### [Comparative Example 1]

An article to be coated having a multilayer coating film B1 was obtained in the same manner as in Example 1 except that carbon black was used as a colored coating material, and the evaluation (1) to (5) were performed. The results are shown in Table 1.

### [Comparative Example 2]

An article to be coated having a multilayer coating film B2 was obtained in the same manner as in Example 1 except that in the step (IV) of forming a glitter coating film, the glitter pigment dispersion was applied such that the thickness of the glitter coating film in the resulting multilayer coating film was 2 µm, and the evaluations (1) to (5) were performed. The results are shown in Table 1.

### [Comparative Example 3]

An article to be coated having a multilayer coating film B3 was obtained in the same manner as in Example 1 except that mica (thickness: 1 µm, average particle size: 17 µm) was used in place of the scaly aluminum particles A in the preparation (II-2) of the glitter pigment dispersion, and the evaluations (1) to (5) were performed. The results are shown in Table 1.

### [Comparative Example 4]

An article to be coated having a multilayer coating film B4 was obtained in the same manner as in Example 1 except that scaly aluminum particles B (trade name: "6320N", manufactured by Toyo Aluminium K.K., thickness: 0.5 µm, average particle size: 15 µm) were used instead of the scaly aluminum particles A in the preparation of the glitter pigment dispersion (II-2), and the evaluations (1) to (5) were performed. The results are shown in Table 1.

[Comparative Example 5] An article to be coated having a multilayer coating film B5 was obtained in the same manner as in Example 1 except that deionized water was added such that the solid content of the glitter pigment dispersion was 12% in the preparation of the glitter pigment dispersion (II-2), and the evaluation (1) to (5) were performed. The results are shown in Table 1.

### [Comparative Example 6]

An article to be coated having a multilayer coating film B6 was obtained in the same manner as in Example 1 except that 0.32 parts of the scaly aluminum particles A were blended in the preparation of the glitter pigment dispersion (II-2), and the evaluation (1) to (5) were performed. The results are shown in Table 1.

**[Table 1]**

| | Colored coating film | Glitter coating film | | | | | Multilayer coating film | | | |
|---|---|---|---|---|---|---|---|---|---|---|
| | CL*45 | Thickness | Glitter pigment | Thickness of glitter pigment | Titanium dioxide | Solid concentration | Occupancy | L*45 | L5/L15 | Graininess G |
| Example 1 | 89 | 0.5 µm | Scaly aluminum particle A | 0.16 µm | Contained | 5.5% | 18% | 80 | 1.5 | 2.0 |
| Comparative Example 1 | 65 | 0.5 µm | Scaly aluminum particle A | 0.16 µm | Contained | 5.5% | 18% | 53 | 1.6 | 2.0 |
| Comparative Example 2 | 89 | 2 µm | Scaly aluminum particle A | 0.16 µm | Contained | 5.5% | 45% | 61 | 1.1 | 2.0 |
| Comparative Example 3 | 89 | 0.5 µm | Mica | - | Contained | 5.5% | 18% | 88 | 1.3 | 3.3 |
| Comparative Example 4 | 89 | 0.5 µm | Scaly aluminum particle B | 0.5 µm | Contained | 5.5% | 18% | 78 | 1.5 | 3.8 |
| Comparative Example 5 | 89 | 0.5 µm | Scaly aluminum particle A | 0.16 µm | Contained | 12.0% | 18% | 83 | 1.1 | 2.5 |
| Comparative Example 6 | 89 | 0.5 µm | Scaly aluminum particle A | 0.16 µm | Contained | 5.5% | 35% | 68 | 1.1 | 2.0 |

### [Example 2]

An article to be coated having a multilayer coating film A2 was obtained in the same manner as in Example 1 except that the colored coating material (X-2), glitter pigment dispersion (Y-2), and clear coating material (Z-2) given below were used, and then was evaluated. The results of the evaluations (1) to (5) are shown in Table 1. Regarding the evaluation (6), the Si₁₅ value of the multilayer coating film A2 was 3.3. Regarding the evaluation (7) of the multilayer coating film A2, 80% or more of the scaly glitter pigment was arrayed in parallel with the surface of the glitter coating film. Regarding the evaluation (8) of the multilayer coating film A2, 80% or more of the scaly glitter pigment did not overlap other scaly glitter pigments.

In the multilayer coating film A2, the thickness of the colored coating film was 30 µm, and the monochrome hiding film thickness of the colored coating film was 60 µm. The glitter coating film had a thickness of 0.5 µm. The clear coating film had a thickness of 30 µm.

### (II-1) Preparation of colored coating material

A stainless steel beaker was charged with 7.59 parts of an acrylic resin having an epoxy group produced in the following manner, 13.81 parts of DIANAL HR-2077(acrylic resin manufactured by Mitsubishi Rayon Co., Ltd.), 15.45 parts of DIANAL HR-2025(acrylic resin manufactured by Mitsubishi Rayon Co., Ltd.), 3.89 parts of U-VAN 20N60 (butylated melamine resin manufactured by Mitsui Cytec Co.), 3.89 parts of U-VAN 226 (U-VAN 225) (butylated melamine resin manufactured by Mitsui Chemicals, Inc.), 0.99 parts of MYCOAT 506 (butylated melamine resin manufactured by Mitsui Cytec Co.), 1.91 parts of SUMIDUR BL-3175(blocked polyisocyanate manufactured by Sumika Bayer Urethane Co., Ltd.), 2 parts of DURANATE MF-K60X (HDI blocked polyisocyanate manufactured by Asahi-Kasei Chemicals Corporation), 0.49 parts of TINUVIN 384-2 (ultraviolet absorber manufactured by BASF Japan Ltd.), 0.49 parts of CHISORB 523 (Double Bond Chemical Ind., Co., Ltd., light stabilizer), 0.49 parts of DISPARLON 4200-10 (anti-sagging/settling agent manufactured by Kusumoto Chemicals, Ltd., polyethylene oxide), 0.02 parts of DISPARLON 4200-20 (Anti-sagging and anti-settling agent manufactured by Kusumoto Chemicals, Ltd., polyethylene oxide), 0.04 parts of BYK-110 (pigment dispersant manufactured by BYK Japan KK), 0.16 parts of BYK-182 (pigment dispersant manufactured by BYK Japan KK), 0.05 parts of FLOWLEN AC-300 (mixture of alkyl vinyl ether polymer, alkyl acrylate polymer, and alkyl methacrylate polymer manufactured by Kyoeisha Chemical Co., Ltd.), 0.37 parts of di-2-ethylhexylphosphoric acid, white pigment, and a solvent composed of toluene/S-100/S-150/ethyl ethoxy propionate (mass ratio: 62/3/1/3), the mixture was mixed and stirred with a disper, affording a colored coating material (X-2).

### (Production of acrylic resin having an epoxy group)

A separable flask equipped with a reflux condenser, a dropping funnel, a thermometer, and a stirring blade was charged with 520 parts of SOLVESSO 100 (S-100) and 50 parts of butyl acetate, and the temperature was raised to 120°C under a nitrogen atmosphere. To this, a monomer mixed solution composed of 250 parts of styrene, 60 parts of n-butyl acrylate, 60 parts of isobutyl methacrylate, 173 parts of isobornyl acrylate, 103 parts of 2-hydroxyethyl acrylate, 354 parts of glycidyl methacrylate, 28.5 parts of Kayaester-O, and 50 parts of butyl acetate was added dropwise at a constant rate over 3 hours through the dropping funnel. After completion of the dropwise addition, the mixture was stirred for additional 30 minutes while the nitrogen atmosphere and the temperature were maintained as they were. Thereafter, a mixed solution of 40 parts of butyl acetate and 99 parts of Kayaester-O was added dropwise to the flask at a constant rate over 30 minutes through the dropping funnel. After completion of the dropwise addition, the mixture was stirred for additional 2 hours while the nitrogen atmosphere and the temperature were maintained as they were. Thereafter, 20 parts of S-100 and 9 parts of butyl acetate were added to the flask, affording an acrylic resin. The acrylic resin obtained had a hydroxyl value of 50 mg KOH/g, an epoxy group equivalent of 405 g/eq, and a number average molecular weight of 2150.

### (II-2) Preparation of glitter pigment dispersion

0.41 parts of CAB, 0.8 parts of an acrylic resin, 0.16 parts of a thermosetting resin, 0.1 parts of a blocked polyisocyanate, 0.1 parts of phosphoric acid, 0.5 parts of scaly aluminum particles A, 19.84 parts of an aluminum-dissolved thinner, 0.07 parts of a surfactant, and 77.77 parts in total of two dilution thinners were mixed and stirred, affording a glitter pigment dispersion (Y-2). The solid content of the glitter pigment dispersion (Y-2) was 2.4%.

### (II-3) Preparation of clear coating material

Macflow 0-1820 clear (acid-epoxy curable resin composition manufactured by Nippon Paint Co., Ltd.) was prepared as a clear coating material (Z-2).

### [Comparative Example 7]

An article to be coated having a multilayer coating film B7 was obtained in the same manner as in Example 2 except that carbon black was used as a colored coating material, and the evaluation (1) to (5) were performed. The results are shown in Table 2.

### [Comparative Example 8]

An article to be coated having a multilayer coating film B8 was obtained in the same manner as in Example 2 except that in the step (IV) of forming a glitter coating film, the glitter pigment dispersion was applied such that the thickness of the glitter coating film in the resulting multilayer coating film was 2 µm, and the evaluations (1) to (5) were performed. The results are shown in Table 2.

### [Comparative Example 9]

An article to be coated having a multilayer coating film B9 was obtained in the same manner as in Example 2 except that mica (thickness: 1 µm, average particle size: 17 µm) was used in place of the scaly aluminum particles A in the preparation (II-2) of the glitter pigment dispersion, and the evaluations (1) to (5) were performed. The results are shown in Table 2.

### [Comparative Example 10]

An article to be coated having a multilayer coating film B10 was obtained in the same manner as in Example 2 except that scaly aluminum particles B (trade name: "6320N", manufactured by Toyo Aluminium K.K., thickness: 0.5 µm, average particle size: 15 µm) were used instead of the scaly aluminum particles A in the preparation of the glitter pigment dispersion (II-2), and the evaluations (1) to (5) were performed. The results are shown in Table 2.

### [Comparative Example 11]

An article to be coated having a multilayer coating film B11 was obtained in the same manner as in Example 2 except that dilution thinner was added such that the solid content of the glitter pigment dispersion was 12% in the preparation of the glitter pigment dispersion (II-2), and the evaluation (1) to (5) were performed. The results are shown in Table 2.

### [Comparative Example 12]

An article to be coated having a multilayer coating film B12 was obtained in the same manner as in Example 2 except that 1.0 parts of the scaly aluminum particles A were blended in the preparation of the glitter pigment dispersion (II-2), and the evaluation (1) to (5) were performed. The results are shown in Table 2.

**[Table 2]**

| | Colored coating film | Glitter coating film | | | | | Multilayer coating film | | | |
|---|---|---|---|---|---|---|---|---|---|---|
| | CL*45 | Thickness | Glitter pigment | Thickness of glitter pigment | Titanium dioxide | Solid concentration | Occupancy | L*45 | L5/L15 | Graininess G |
| Example 2 | 89 | 0.5 µm | Scaly aluminum particle A | 0.16 µm | Contained | 2.4% | 18% | 80 | 1.5 | 2.0 |
| Comparative Example 7 | 65 | 0.5 µm | Scaly aluminum particle A | 0.16 µm | Contained | 2.4% | 18% | 53 | 1.6 | 2.0 |
| Comparative Example 8 | 89 | 2 µm | Scaly aluminum particle A | 0.16 µm | Contained | 2.4% | 45% | 61 | 1.1 | 2.0 |
| Comparative Example 9 | 89 | 0.5 µm | Mica | - | Contained | 2.4% | 18% | 88 | 1.3 | 3.3 |
| Comparative Example 10 | 89 | 0.5 µm | Scaly aluminum particle B | 0.5 µm | Contained | 2.4% | 18% | 78 | 1.5 | 3.8 |
| Comparative Example 11 | 89 | 0.5 µm | Scaly aluminum particle A | 0.16 µm | Contained | 12.0% | 18% | 83 | 1.1 | 2.5 |
| Comparative Example 12 | 89 | 0.5 µm | Scaly aluminum particle A | 0.16 µm | Contained | 2.4% | 35% | 68 | 1.1 | 2.0 |

### INDUSTRIAL APPLICABILITY

The automobile body and the method for manufacturing an automobile body of the present invention can be particularly applied to an exterior panel of an automobile body.

This application claims priority based on Japanese Patent Application No. 2022-079560, which was filed in Japan on May 13, 2022, the disclosure of which application is incorporated herein by reference in its entirety.

### EXPLANATION OF REFERENCES

- 100: Automobile body
- 10: Article to be coated
- 20: Multilayer coating film
- 21: Colored coating film
- 22: Glitter coating film
- 221: Glitter pigment
- 23: Clear coating film

## Claims

1. An automobile body comprising an article to be coated and a multilayer coating film, wherein
the multilayer coating film includes:
a colored coating film formed on the article to be coated and containing a white pigment;
a glitter coating film formed on the colored coating film and containing a glitter pigment; and
a clear coating film formed on the glitter coating film,
a lightness L*45 based on a spectral reflectance attained when light I₄₅ applied at an angle of 45 degrees with respect to a surface of the multilayer coating film is received at an angle of 45 degrees with respect to regularly-reflected light is 70 or more and 90 or less,
a ratio of a lightness L*5 based on a spectral reflectance attained when the light I₄₅ is received at an angle of 5 degrees with respect to regularly-reflected light to a lightness L*15 based on a spectral reflectance attained when the light I₄₅ is received at an angle of 15 degrees with respect to regularly-reflected light, L*5/L*15, is 1.2 or more and 2.5 or less,
an occupancy of the glitter pigment as viewed from the surface of the multilayer coating film is 10% or more and 30% or less, and
a graininess on the surface of the multilayer coating film is 1.0 or more and 3.0 or less.

2. The automobile body according to claim 1, wherein the lightness CL*45 based on a spectral reflectance attained when light IC₄₅ applied at an angle of 45 degrees with respect to a surface of the colored coating film is received at an angle of 45 degrees with respect to regularly-reflected light is 70 or more and 95 or less.

3. The automobile body according to claim 1 or 2, wherein the glitter coating film has a thickness of 0.05 µm or more and 1.0 µm or less.

4. The automobile body according to any one of claims 1 to 3, wherein the glitter pigment contains a scaly glitter pigment having a thickness of 0.05 µm or more and 0.3 µm or less.

5. The automobile body according to any one of claims 1 to 4, wherein the glitter pigment includes aluminum particles.

6. The automobile body according to any one of claims 1 to 5, wherein the glitter coating film further contains titanium dioxide.

7. A method for manufacturing an automobile body, the method comprising:
applying a colored coating material containing a white pigment onto an article to be coated to form an uncured colored coating film;
applying a glitter pigment dispersion containing a glitter pigment onto the uncured colored coating film to form an uncured glitter coating film;
applying a clear coating material onto the uncured glitter coating film to form an uncured clear coating film; and
curing the uncured colored coating film, the uncured glitter coating film, and the uncured clear coating film to obtain a multilayer coating film,
wherein a lightness L*45 based on a spectral reflectance attained when light I₄₅ applied at an angle of 45 degrees with respect to a surface of the multilayer coating film is received at an angle of 45 degrees with respect to regularly-reflected light is 70 or more and 90 or less,
a ratio of a lightness L*5 based on a spectral reflectance attained when the light I₄₃ is received at an angle of 15 degrees with respect to regularly-reflected light to a lightness L*15 based on a spectral reflectance attained when the light I₄₅ is received at an angle of 15 degrees with respect to regularly-reflected light, L*5/L*15, is 1.2 or more and 2.5 or less, and
an occupancy of the glitter pigment as viewed from the surface of the multilayer coating film is 10% or more and 30% or less, and
a graininess on the surface of the multilayer coating film is 1.0 or more and 3.0 or less.

8. The method for manufacturing an automobile body according to claim 7, wherein the clear coating material is a two-pack coating material including a hydroxy group-containing resin and a polyisocyanate compound.

9. The method for manufacturing an automobile body according to claim 7 or 8, wherein the glitter pigment dispersion has a solid content of 0.1% by mass or more and 10.0% by mass or less.
